# EUROPEAN PATENT SPECIFICATION

(11) **EP 4 356 999 B1**
(45) Date of publication and mention of the grant of the patent: **07.01.2026**
(21) Application number: 22202807.8
(22) Date of filing: 20.10.2022
(51) Int. Cl.: B01D 21/24, B01D 21/30, C02F 11/00

(54) **A HOPPER FOR TRANSPORTING SLUDGE**
TRICHTER ZUM TRANSPORT VON SCHLAMM
TRÉMIE POUR TRANSPORTER DES BOUES

(43) Date of publication of application: 24.04.2024
(73) Proprietor: Livoo AB, 572 36 Oskarshamn (SE)
(72) Inventor: Råhlin, Robert, 35264 Växjö (SE)
(74) Representative: Groth & Co. KB

(56) References cited:
- CA-C- 1 328 199
- CN-A- 107 080 985
- US-A- 2 612 402
- US-A- 5 879 541
- US-A1- 2021 171 367

## Description

### Technical field

The present invention relates to a hopper, and especially a hopper for transporting sludge.

### Background

In e.g. oat drink production solid-liquid separation, for instance through centrifugation, is a common production step from which a sludge and a liquid are produced. There is an increased need to decrease waste from food production due to environmental and food security reasons. In order to process the sludge, a hopper may be arranged in connection with a solid-liquid separator to transport the sludge to e.g. a pump. However, with liquid removed, the sludge may have a texture that makes it complicated to transport. Consequently, there is a need for a solution which enhances the utilization of the produced sludge.

Known arrangements for handling different kinds of material may be found in e.g. US5879541A1, CN107080985A, US2021171367A1, and CA1328199.

### Summary

It is an object of the present invention to provide an improved solution that alleviates the mentioned drawbacks with present devices. Furthermore, it is an object to provide hopper that facilitates transport of sludge.

The invention is defined by the appended independent claims, with embodiments being set forth in the appended dependent claims, in the following description and in the drawings.

According to one aspect of the present invention there is provided a solid-liquid sludge separator arrangement comprising a solid-liquid separator; a pump; at least one weight cell; a hopper configured to receive sludge from a solid-liquid separator and to transport the sludge by means of gravity along a direction of transportation; and a controlling means. The hopper comprises at least one wall extending along the direction of transportation of the sludge. Moreover, the hopper comprises at least one flat spray nozzle configured to spray a liquid onto the at least one wall of the hopper mainly along a horizontal line extending substantially perpendicular to the direction of transportation. The at least one weight cell is arranged in connection to the hopper and/or the pump and configured to measure a load onto the hopper. The controlling means is configured to adjust the flow of liquid through the at least one flat spray nozzle based on the measurement of the at least one weight cell.

The hopper may enable transportation of sludge from the solid-liquid separator. Said transportation of sludge may be enabled without decreasing the dry water content of the sludge with more than a few percent. To keep the dry water content low may be important for the utilization of the sludge. Instead of increasing the amount of water in sludge, which may reduce the risk of sludge attaching to the wall of the hopper, but which is not desired for the utilization of the sludge, a small amount of liquid is sprayed on the wall to prevent the sludge from attaching to the wall. The hopper may be attached to the solid-liquid separator. Spraying water through the at least one nozzle towards a wall of the hopper may remove attachment of sludge to said wall of the hopper by decreasing friction between the sludge and said wall so as the sludge can slide along the wall.

In one embodiment the hopper may comprise several nozzles, such as two, three, four or more nozzles. The nozzles may be arranged to spray onto different walls of the hopper. Alternatively, more than one nozzle may spray liquid onto each or some of the at least one wall of the hopper.

The inclusion of several nozzles may be more effective in transporting the sludge since the friction between the sludge and at more portions of the walls of the hopper may be decreased. Further, the amount of liquid being sprayed on the area of the at least one wall may be further controlled.

In one embodiment the hopper may comprise a curved pipe which protrudes from the at least one wall and is curved towards the at least one wall, wherein the nozzle is attached to said curved pipe.

A curved pipe may be suitable for providing the nozzle with the liquid in an appropriate direction in relation to the wall so as friction can be decreased between the wall and the sludge. A curved pipe may also be suitable for not impacting the liquid flow which an edgy pipe may do. Further, with such curved pipe, it may be avoided that the pipe and nozzle interfere with the sludge being transported through the hopper.

A flat spray nozzle may contribute to a large spread of the ejected liquid so as the friction may be decreased between the sludge and a large part of the wall onto which the nozzle sprays while minimizing the amount of sprayed liquid in order to minimize the increment of the dry content of the sludge. A goal may be to achieve as effective lowering of friction on the at least one wall as possible with as low amount of liquid as possible since the level of dry matter content of the sludge may not be desired to decrease. By using a flat spray nozzle, the area of the at least one wall that may be sprayed may be limited, providing line-shaped spraying area on the at least one wall. The flat spray nozzle is arranged such that the line-shaped spraying area extends in a direction substantially perpendicular to the transportation direction of the sludge.

In one embodiment the at least one nozzle may be directed towards the at least one wall with an angle between 80 and 120 degrees, preferably between 90 and 110 degrees, or more preferably between 95 and 105 degrees.

The direction of the nozzle may provide a desired angle between the ejected water and the wall, such as an angle between 95 and 105 degrees, which may further contribute to a desired spread of the ejected liquid so as to decrease friction between the wall and the sludge and minimizing the amount of needed sprayed liquid.

In one embodiment the hopper may be configured to receive sludge that has between 30 % and 45 % dry matter content.

A dry matter content between 30 and 45 % may be suitable for the sludge to be effectively utilized e.g. for food production.

In one embodiment the at least one nozzle may be configured to supply liquid that decrease the dry matter content of the received sludge with less than 2 %.

Due to the stated dry matter content range, which the sludge may have when leaving the solid-liquid separator, it may be desirable to avoid a too large increase of said dry matter content. The level of dry matter content may not decrease such that possibility to utilize the sludge is too much negatively affected.

In one embodiment the liquid may be water.

Water may be a suitable liquid since it is appropriate to use in the food industry and it decreases friction between the sludge and the at least one wall.

In one embodiment the liquid may comprise a lubricant or a solvent.

The liquid being a mix between water and a lubricant may enable to further decrease the amount of sprayed liquid and still achieving sufficient friction between the wall and the sludge. The dry content of the sludge may thereby be affected even less than if pure water is used.

In one embodiment the at least one nozzle may be configured to provide a liquid pressure of between 3 and 4 bar.

A liquid pressure between 3 and 4 bar may be suitable to spray an appropriate amount of liquid in order to achieve sufficient friction and not affect the dry content of the sludge to a too large degree.

In one embodiment the hopper may be shaped as a funnel which is narrowing in the direction of transportation of the sludge.

A funnel shaped hopper may be suitable to connect the solid-liquid separator with a pump whereas the sludge is moved through the hopper by means of gravity.

In one embodiment the hopper may comprise a weight cell which is configured to monitor occurrence of excess amount of sludge attaching to the at least one wall.

The weight cell may continuously or repeatedly measure the weight of the hopper, whereas the weight of the hopper may indicate whether an accumulation of excess sludge is occurring.

In one embodiment the hopper may comprise a controlling means configured to control liquid flow provided to the at least one nozzle based on a signal from said weight cell.

The controlling means may by adjusting the flow provided to the at least one nozzle counteract excess sludge being attached to the hopper, which may cause clog and bridge building. Thereby the controlling means may increase the liquid flow in response to occurring excess attachment and so decrease the friction further between the sludge and the hopper. In such manner the attachment of sludge may be decreased, and bridge and clog building may be prevented.

In one embodiment the nozzle may be arranged less than 10 cm from the at least one wall.

In one embodiment the hopper may be configured for transportation of a food residual sludge product.

In one embodiment the hopper may be configured to be arranged to a pump and to transport the sludge to said pump.

In one embodiment the solid liquid separator arrangement may be configured for oat drink production.

The arrangement may enable production of oat drink and utilization of sludge that may be a residual product of the oat drink production. The sludge may effectively be transported to the pump and pumped into an outflow pipe with said arrangement.

In one embodiment there may be arranged at least one weight cell in connection to the hopper and/or the pump and there may be arranged a pressure sensor in an outflow pipe of the pump. Measurements of said at least one weight cell and/or the pressure sensor may be used to control the liquid flow provided to the at least one nozzle.

Thereby the outflow of liquid through the at least one nozzle may be held sufficiently high to prevent accumulation of sludge in the hopper and sufficiently low to not decrease the dry water content of the sludge to an undesired level.

In one embodiment the solid liquid separator may be a centrifuge. A centrifuge may be suitable for producing oat drink and a sludge which may be utilized with the present invention.

According to a second aspect of the present invention there is provided a method for transporting sludge from a solid-liquid separator. The method comprises the steps of allowing the sludge to move through a hopper by means of gravity along a direction of transportation, measuring a load onto the hopper with a weight cell, spraying a liquid onto at least one wall of the hopper through at least one nozzle wherein the spraying is made mainly along a horizontal line extending substantially perpendicular to the direction of transportation, and adjusting the liquid flow provided to the at least one nozzle based on measured values of the weight cell.

The method may provide the same benefits as the hopper and/or the solid-liquid arrangements as described above. With the provided method improved utilization of the sludge may be enabled. Further, clogging and bridge building of the sludge in the hopper may be prevented.

In one embodiment the method may comprise a preliminary step of solid-liquid production through centrifugation in which oat drink and a sludge are produced from an oat mix solution.

In one embodiment the method may comprise a step of pumping sludge with a pump which receives the sludge from the hopper.

### Brief description of the drawings

The invention will in the following be described in more detail with reference to the enclosed drawings, wherein:
Fig. 1 shows schematic side view of an arrangement according to an embodiment of the invention;
Fig. 2 shows a side view of a hopper according to an embodiment of the invention;
Fig. 3 shows a side view of a hopper according to an embodiment of the invention; and
Fig. 4 shows a flow chart of a method according to an embodiment of the invention.

### Detailed description

The present invention will be described more fully hereinafter with reference to the accompanying drawings, in which preferred embodiments of the invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art. In the drawings, like numbers refer to like elements.

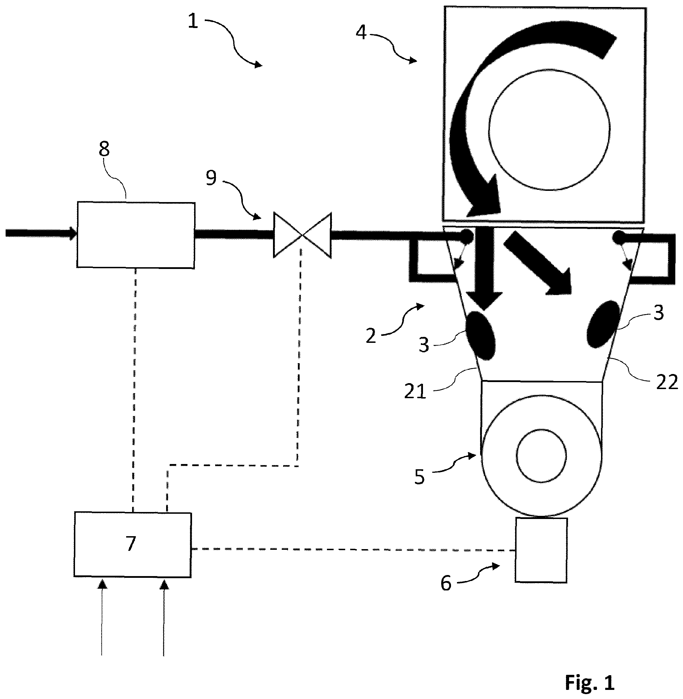

In Fig. 1 a solid-liquid separator arrangement 1 is illustrated. The solid liquid arrangement comprises a centrifuge 4. The centrifuge 4 is configured to be provided with a mixture which includes e.g. oat. In some embodiments another mixture is centrifugated. Through the centrifugation an oat drink is produced which is output through an outflow of the centrifuge 4. In the centrifuge 4, sludge 3 is also produced as a residual product. The sludge 3 is received by a hopper 2, which is configured, by its shape and size, to let the sludge move through said hopper 2 by means of gravity.

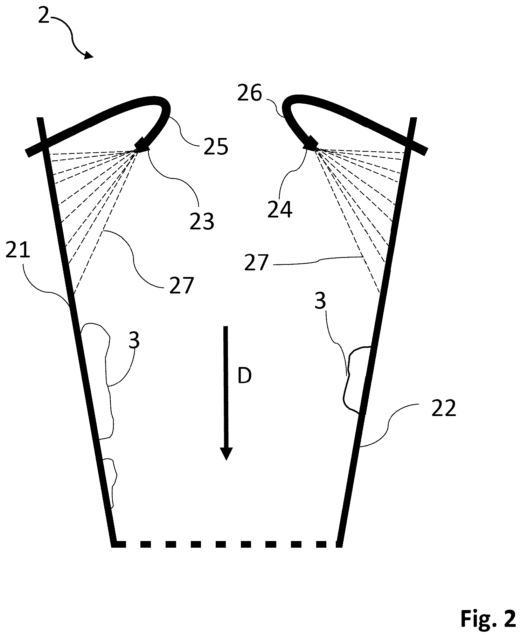

The hopper 2 is seen in more detail in Fig. 2. The sludge 3 moves through the hopper 2 by means of the gravitational force, which is directed downwards in the direction D. Due to the consistence of the sludge, which in some embodiments is a sticky paste, friction between the sludge and walls of the hopper 2 emerges and the sludge tends to stick to the walls. The hopper 2 is in some embodiments shaped as a funnel, which is to be interpreted as that the cross section of the hopper is narrowing towards the bottom of the hopper. The hopper 2 comprises nozzles 23, 24 which are configured to spray liquid onto one wall 21, 22 each. In the illustrated embodiment the hopper 2 comprises two nozzles.

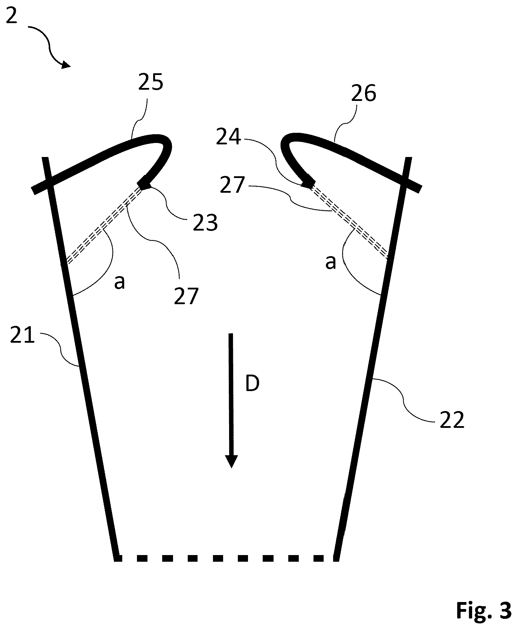

Each nozzle 23, 24 is provided with water through a curved pipe 25, 26 which protrudes from a wall 21, 22 and is configured to spray water 27 with an angle a of about 100 degrees from the walls 23, 24 respectively. Said angle a is seen in the vertical cross-sectional image of the hopper 2 in Fig. 3. The angle a may be defined as an angle between the wall 21, 22 and the direction of the nozzle 23, 24. By spraying water 27 with an angle a, a large area of respective walls of the hopper are reached by ejected droplets from the nozzle. In other embodiments the nozzle is configured to spray water towards a wall 21 of the hopper 2 with another angle.

In the embodiment in Fig. 3, the nozzles 23, 24 are flat spray nozzles. The flat spray nozzles eject water 27 mainly in the form of a horizontal line on the wall 21, 22 of the hopper 2. The horizontal line extends in a direction substantially perpendicular to the direction D of transportation of the sludge 3. The water 27 sprayed with the flat spray nozzles then run down along the walls 21, 22 of the hopper 2. By using flat spray nozzles, less amount of water 27 can cover a large area of the walls 21, 22.

In some embodiments there are several nozzles spraying towards one wall 21.

Below the hopper 2, arranged to the hopper 2 or to a pump 5, there is a weight cell 6 which is configured to measure the load onto the hopper from the sludge 3, as illustrated in Fig. 1.

The solid liquid separator arrangement 1 also comprises a pump 5 which is connected to the hopper. The pump 5 is configured to receive sludge 3 from the hopper 2 and pump it through an outlet channel. In the outflow channel of the pump 5 there is, in some embodiments, arranged a pressure sensor which is configured to measure the pressure of the sludge 3 in the outlet channel.

Further, the arrangement 1 comprises a controlling means 7, configured to receive measurements from the weight cell 6 and/or the pressure sensor. There is arranged a control valve 9 in an inflow channel to the at least one nozzle 23, 24. The controlling means 7 is configured to control the control valve 9 based on input from the weight cell 6 and/or the pressure sensor.

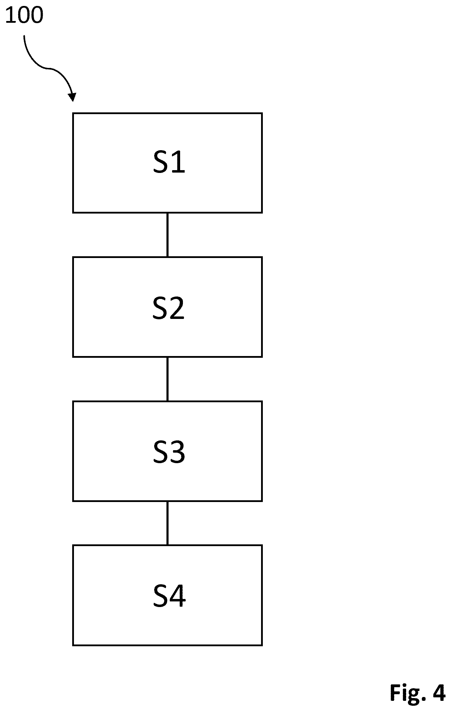

In Fig. 4 there is disclosed a flow chart of steps of a method 100 for transporting sludge 3 from a solid-liquid separator. Sludge 3 is formed by solid-liquid separation, e.g. centrifugation of a mixture which comprises oat. From the solid-liquid separator 4, a liquid is produced which is lead through an outlet of the separator 4. The sludge 3 that is formed is let out through another outlet of the solid-liquid separator. The method 100 comprises a step of allowing S1 sludge 3 to move through a hopper 2 by means of gravity. Whereas the gravity implies a downward force onto the sludge, friction between the sludge and one or several walls 21, 22 of the hopper counteracts the transportation of the sludge 3. The method 100 comprises a second step of spraying S2 a water film onto at least one wall 21 of the hopper 2 through at least one nozzle 23, 24. The water film is formed by droplets which are ejected by the nozzle 23, 24. Some of the droplets are ejected with an angle of about 100 degrees from the wall 21 of the hopper. Several nozzles may spray water onto one wall 21 each or several nozzles per wall.

By spraying droplets towards at least one wall 21 of the hopper the friction is decreased between the sludge 3 and the walls so as the transportation of sludge through the hopper 2 is facilitated. The sludge 3 is transported to a pump 5 below the hopper 2. The pump 5 pumps the sludge 3 through a pump outlet. The method comprises a third step of measuring S3 weight onto the hopper 2 with a weight cell 6. The weight cell 6 measures the weight onto the hopper continuously or repeatedly. The weight cell 6 is located below the hopper and in some embodiments even below the pump 5. Moreover, in the pump outlet, there is arranged a pressure sensor which continuously or repeatedly measures the pressure in the pump outlet. The measurement information is sent from the weight cell 6 and the pressure sensor to a controlling means 7.

The method comprises a fourth step of adjusting S4 the liquid flow provided to the at least one nozzle 23, 24 based on measured values from the weight cell 6. At an inflow to the at least one nozzle there is arranged a control valve 9. The controlling means 7 controls the liquid pressure provided to the at least one nozzle 23, 24 through the control valve 9. If the weight onto the hopper 2 is high there is an indication that more liquid should be ejected by the at least one nozzle and therefore the control valve 9 should provide a higher liquid flow to the at least one nozzle 23, 24. The controlling means 7 may further receive input from a flow meter 8. The controller means 7 does however also base the liquid flow that it controls the control valve 9 to give, by the pressure sensor in the pump outflow. If said pressure sensor registers a low pressure, it is an indication that the dry matter content of the sludge 3 is low, which is counteracted by decreasing the liquid flow provided to the at least one nozzle 23, 24. The controlling means 7 controls the control valve 9 based on both the liquid flow measured in the pump outflow and the weight measured by said weight cell 6.

In the drawings and specification, there have been disclosed preferred embodiments and examples of the invention and, although specific terms are employed, they are used in a generic and descriptive sense only and not for the purpose of limitation, the scope of the invention being set forth in the following claims.

## Claims

1. A solid-liquid sludge separator arrangement (1) comprising a solid-liquid separator (4);
a pump (5);
at least one weight cell (6);
a hopper (2) configured to receive sludge (3) from the solid-liquid separator (4) and to transport the sludge (3) by means of gravity along a direction (D) of transportation to the pump (5); and
a controlling means;
wherein said hopper (2) comprises
at least one wall (21) extending along the direction (D) of transportation of the sludge (3); **characterized in that**
at least one flat spray nozzle (23, 24) configured to spray a liquid (27) onto the at least one wall of the hopper mainly along a horizontal line extending substantially perpendicular to the direction (D) of transportation;
wherein the at least one weight cell (6) is arranged in connection to the hopper (2) and/or the pump (5) and configured to measure a load onto the hopper (2); and
wherein the controlling means is configured to adjust the flow of liquid through the at least one flat spray nozzle (23, 24) based on the measurement of the at least one weight cell (6).

2. The solid-liquid sludge separator arrangement (1) according to claim 1, further comprising a curved pipe (25, 26) which protrudes from the at least one wall (21, 22) and is curved towards the at least one wall, wherein the nozzle (23, 24) is attached to said curved pipe (25, 26).

3. The solid-liquid sludge separator arrangement (1) according to any one of the preceding claims, wherein the at least one nozzle (23, 24) is directed towards the at least one wall (21, 22) with angle (a) between 80 and 120 degrees, preferably between 90 and 110 degrees.

4. The solid-liquid sludge separator arrangement (1) according to any one of the preceding claims, wherein hopper (2) is configured to receive sludge (3) that has between 30 % and 45 % dry matter content.

5. The solid-liquid sludge separator arrangement (1) according to any one of the preceding claims, wherein the liquid (27) is water.

6. The solid-liquid sludge separator arrangement (1) according to any one of the preceding claims, wherein the liquid (27) comprises a lubricant or a solvent.

7. The solid-liquid sludge separator arrangement (1) according to any one of the preceding claims, wherein the at least one nozzle (23, 24) is configured to be provided a liquid pressure of between 3 and 4 bar.

8. The solid-liquid sludge separator arrangement (1) according to any one of the preceding claims, wherein the nozzle (23, 24) is arranged less than 10 cm from the at least one wall (21, 22).

9. The solid-liquid sludge separator arrangement (1) according to any one of the preceding claims, wherein the sludge (3) is a food residual product.

10. A method for transporting sludge (3) from a solid-liquid separator (4),
said method comprising the steps of
allowing (S1) the sludge (3) to move through a hopper (2) by means of gravity along a direction (D) of transportation;
measuring (S2) a load onto the hopper (2) with a weight cell (6); spraying (S3) a liquid onto at least one wall of the hopper (2) through at least one flat spray nozzle (23, 24), wherein the spraying is made mainly along a horizontal line extending substantially perpendicular to the direction (D) of transportation;
adjusting (S4) the liquid flow provided to the at least one nozzle based on measured values from the weight cell (6).

## Patentansprüche

1. Fest-Flüssig-Schlammabscheideranordnung (1), umfassend einen Fest-Flüssig-Abscheider (4);
eine Pumpe (5);
mindestens eine Wägezelle (6);
einen Trichter (2), der eingerichtet ist, Schlamm (3) aus dem Fest-Flüssig-Abscheider (4) aufzunehmen und den Schlamm (3) mittels Schwerkraft entlang einer Transportrichtung (D) zur Pumpe (5) zu fördern; und
ein Steuermittel;
wobei der genannte Trichter (2)
mindestens eine Wand (21) umfasst, die sich entlang der Transportrichtung (D) des Schlamms (3) erstreckt; **dadurch gekennzeichnet, dass**
mindestens eine Flachstrahldüse (23, 24) vorgesehen ist, die eingerichtet ist, eine Flüssigkeit (27) im Wesentlichen entlang einer horizontalen Linie, die sich im Wesentlichen senkrecht zur Transportrichtung (D) erstreckt, auf die mindestens eine Wand des Trichters zu sprühen;
wobei die mindestens eine Wägezelle (6) in Verbindung mit dem Trichter (2) und/oder der Pumpe (5) angeordnet ist und eingerichtet ist, eine Belastung auf den Trichter (2) zu messen; und
wobei das Steuermittel eingerichtet ist, den Flüssigkeitsfluss durch die mindestens eine Flachstrahldüse (23, 24) basierend auf der Messung der mindestens einen Wägezelle (6) zu regeln.

2. Fest-Flüssig-Schlammabscheideranordnung (1) nach Anspruch 1, ferner umfassend ein gebogenes Rohr (25, 26), das aus der mindestens einen Wand (21, 22) herausragt und zur mindestens einen Wand hin gebogen ist, wobei die Düse (23, 24) an dem genannten gebogenen Rohr (25, 26) befestigt ist.

3. Fest-Flüssig-Schlammabscheideranordnung (1) nach einem der vorhergehenden Ansprüche, wobei die mindestens eine Düse (23, 24) mit einem Winkel (a) zwischen 80 und 120 Grad, vorzugsweise zwischen 90 und 110 Grad, auf die mindestens eine Wand (21, 22) gerichtet ist.

4. Fest-Flüssig-Schlammabscheideranordnung (1) nach einem der vorhergehenden Ansprüche, wobei der Trichter (2) eingerichtet ist, Schlamm (3) aufzunehmen, der einen Trockensubstanzgehalt zwischen 30 % und 45 % aufweist.

5. Fest-Flüssig-Schlammabscheideranordnung (1) nach einem der vorhergehenden Ansprüche, wobei die Flüssigkeit (27) Wasser ist.

6. Fest-Flüssig-Schlammabscheideranordnung (1) nach einem der vorhergehenden Ansprüche, wobei die Flüssigkeit (27) ein Schmiermittel oder ein Lösungsmittel umfasst.

7. Fest-Flüssig-Schlammabscheideranordnung (1) nach einem der vorhergehenden Ansprüche, wobei die mindestens eine Düse (23, 24) dafür eingerichtet ist, mit einem Flüssigkeitsdruck zwischen 3 und 4 bar versorgt zu werden.

8. Fest-Flüssig-Schlammabscheideranordnung (1) nach einem der vorhergehenden Ansprüche, wobei die Düse (23, 24) in einem Abstand von weniger als 10 cm von der mindestens einen Wand (21, 22) angeordnet ist.

9. Fest-Flüssig-Schlammabscheideranordnung (1) nach einem der vorhergehenden Ansprüche, wobei der Schlamm (3) ein Lebensmittelrestprodukt ist.

10. Verfahren zum Fördern von Schlamm (3) aus einem Fest-Flüssig-Abscheider (4), wobei das Verfahren die Schritte umfasst Zulassen (S1) des Schlamms (3), sich mittels Schwerkraft durch einen Trichter (2) entlang einer Transportrichtung (D) zu bewegen;
Messen (S2) einer Belastung auf den Trichter (2) mit einer Wägezelle (6);
Sprühen (S3) einer Flüssigkeit auf mindestens eine Wand des Trichters (2) durch mindestens eine Flachstrahldüse (23, 24), wobei das Sprühen im Wesentlichen entlang einer horizontalen Linie erfolgt, die sich im Wesentlichen senkrecht zur Transportrichtung (D) erstreckt;
Regeln (S4) des der mindestens einen Düse zugeführten Flüssigkeitsflusses basierend auf gemessenen Werten der Wägezelle (6) .

## Revendications

1. Agencement de séparateur de boues solide-liquide (1) comprenant
un séparateur solide-liquide (4) ;
une pompe (5) ;
au moins une cellule de pesage (6) ;
une trémie (2) configurée pour recevoir des boues (3) provenant du séparateur solide-liquide (4) et pour transporter les boues (3) par gravité le long d'une direction (D) de transport vers la pompe (5) ; et
un moyen de commande ;
dans lequel ladite trémie (2) comprend au moins une paroi (21) se prolongeant le long de la direction (D) de transport des boues (3) ; **caractérisé en ce que** au moins une buse de pulvérisation plate (23, 24) configurée pour pulvériser un liquide (27) sur au moins une paroi de la trémie principalement le long d'une ligne horizontale se prolongeant sensiblement perpendiculairement à la direction (D) de transport ;
dans lequel la au moins une cellule de pesage (6) est agencée en liaison avec la trémie (2) et/ou la pompe (5) et configurée pour mesurer une charge sur la trémie (2) ; et
dans lequel le moyen de commande est configuré pour ajuster le débit de liquide à travers la au moins une buse de pulvérisation plate (23, 24) sur la base de la mesure de la au moins une cellule de pesage (6).

2. Agencement de séparateur de boues solide-liquide (1) selon la revendication 1, comprenant également un tuyau courbe (25, 26) qui fait saillie depuis la au moins une paroi (21, 22) et est courbé vers la au moins une paroi, dans lequel la buse (23, 24) est fixée audit tuyau courbe (25, 26).

3. Agencement de séparateur de boues solide-liquide (1) selon l'une quelconque des revendications précédentes, dans lequel la au moins une buse (23, 24) est dirigée vers la au moins une paroi (21, 22) avec un angle (a) compris entre 80 et 120 degrés, de préférence entre 90 et 110 degrés.

4. Agencement de séparateur de boues solide-liquide (1) selon l'une quelconque des revendications précédentes, dans lequel la trémie (2) est configurée pour recevoir des boues (3) qui présentent une teneur en matière sèche comprise entre 30 % et 45 %.

5. Agencement de séparateur de boues solide-liquide (1) selon l'une quelconque des revendications précédentes, dans lequel le liquide (27) est de l'eau.

6. Agencement de séparateur de boues solide-liquide (1) selon l'une quelconque des revendications précédentes, dans lequel le liquide (27) comprend un lubrifiant ou un solvant.

7. Agencement de séparateur de boues solide-liquide (1) selon l'une quelconque des revendications précédentes, dans lequel la au moins une buse (23, 24) est configurée pour fournir une pression de liquide comprise entre 3 et 4 bars.

8. Agencement de séparateur de boues solide-liquide (1) selon l'une quelconque des revendications précédentes, dans lequel la buse (23, 24) est agencée à moins de 10 cm de la au moins une paroi (21, 22).

9. Agencement de séparateur de boues solide-liquide (1) selon l'une quelconque des revendications précédentes, dans lequel les boues (3) sont un produit de résidu alimentaire.

10. Procédé de transport de boues (3) provenant d'un séparateur solide-liquide (4), ledit procédé comprenant les étapes consistant à
permettre (S1) aux boues (3) de se déplacer à travers une trémie (2) par gravité le long d'une direction (D) de transport ; mesurer (S2) une charge sur la trémie (2) avec une cellule de pesage (6) ;
pulvériser (S3) un liquide sur au moins une paroi de la trémie (2) à travers au moins une buse de pulvérisation plate (23, 24), dans lequel la pulvérisation est effectuée principalement le long d'une ligne horizontale se prolongeant sensiblement perpendiculairement à la direction (D) de transport ;
ajuster (S4) le débit de liquide fourni à la au moins une buse sur la base de valeurs mesurées à partir de la cellule de pesage (6) .
